# EUROPEAN PATENT APPLICATION

(11) **EP 4 572 003 A1**
(43) Date of publication of application: **18.06.2025**
(21) Application number: 24215457.3
(22) Date of filing: 26.11.2024
(51) Int. Cl.: H01M 50/691, H01M 10/04, H01M 10/052

(54) **APPARATUS AND METHOD FOR REMOVING RESIDUAL ELECTROLYTE**

(30) Priority: 01.12.2023 KR 20230172072
(71) Applicant: Samsung SDI Co., Ltd., Yongin-si, Gyeonggi-do 17084 (KR)
(72) Inventor: Lee, Tae Yoon, Yongin-si, Gyeonggi-do 17084 (KR); Park, Hyun Suk, Yongin-si, Gyeonggi-do 17084 (KR); Yang, Jun Ho, Yongin-si, Gyeonggi-do 17084 (KR); Choi, Woo Hyuk, Yongin-si, Gyeonggi-do 17084 (KR); Kwon, Jun Hwan, Yongin-si, Gyeonggi-do 17084 (KR); Kim, Young Ho, Yongin-si, Gyeonggi-do 17084 (KR); Kang, Bong Geun, Yongin-si, Gyeonggi-do 17084 (KR); Lim, Seung Man, Yongin-si, Gyeonggi-do 17084 (KR)
(74) Representative: Gulde & Partner

(57) **Abstract**

Apparatus for removing a residual electrolyte, in which a residual electrolyte remaining after an electrolyte injection is removed in a suction manner to solve limitations in dimensional abnormalities, contamination of an upper portion of a cell, and contamination of molding equipment, thereby enabling continuous production and improving product quality and product reliability, and a method for removing a residual electrolyte using the same. An apparatus for removing a residual electrolyte includes a battery cell including an electrode assembly and an electrolyte, a suction part having at least one opening and configured to suction the residual electrolyte remaining in the battery cell, and a pump part connected to the suction part to generate a vacuum pressure, thereby generating suction force.

## Description

### BACKGROUND

### 1. Field

Aspects of embodiments of the present disclosure relate to an apparatus for removing a residual electrolyte and a method for removing a residual electrolyte using the same.

### 2. Description of the Related Art

A cylindrical secondary battery includes a cylindrical electrode assembly, a cylindrical can accommodating the electrode assembly and an electrolyte, and a cap assembly coupled to an opening of an upper end of the can to seal the can and electrically connected to the electrode assembly to electrically connect an external constitution to the electrode assembly.

The cylindrical secondary battery generally has a structure in which a can having negative polarity and a cap assembly having positive polarity are insulated from each other by a gasket. In the case of a battery module using a plurality of cylindrical secondary batteries, which are connected to each other, there are limitations due to the complicated structure that can increase process times. For example, bus bars must be connected to upper and lower portions of the secondary batteries, respectively.

In the cylindrical secondary battery, a residual electrolyte may remain in the battery, for example by pooling at one side, such as a beading part after electrolyte injection. If molding is performed without cleaning the residual electrolyte, a limitation in continuous production may occur due to dimensional abnormalities, contamination of an upper portion of a cell, and contamination of molding equipment.

The above-described information disclosed in the technology that serves as the background of the present disclosure is only for improving understanding of the background of the present disclosure and thus may include information that does not constitute the related art.

### SUMMARY

Embodiments of the present disclosure provide an apparatus for removing a residual electrolyte, which is capable of removing a residual electrolyte from a battery cell, and a method for removing a residual electrolyte using the same.

According to some embodiments, an apparatus for removing a residual electrolyte includes: a battery cell including an electrode assembly and an electrolyte; a suction part having at least one opening and configured to suction the residual electrolyte from the battery cell; and a pump part connected to the suction part to generate a vacuum pressure, thereby generating suction force.

The suction part may include: a suction head seated at a side of the battery cell at which an electrolyte injection port is disposed; and a suction neck connected to a connection line between the pump part and the suction part.

A lower portion of the suction hole may shaped to receive the battery cell.

A lower portion of the suction head may have a cylindrical shape, and an upper portion of the suction head may be inclined on the suction neck.

An outer diameter of the lower portion of the suction head may be approximately 90% to approximately 100% of a diameter of the battery cell, preferably 92% to approximately 100% and more preferably 94% to approximately 100%.

A plurality of holes may be included in the suction head, and the plurality of holes may be in contact with a seated portion of the battery cell.

A diameter of each of the plurality of holes may be approximately 0.5% to approximately 1% of the battery cell, preferably 0.6% to 0.9 % and more preferably 0.7% to 0.8%.

The suction head may have a plurality of grooves at regular intervals in contact with the seated portion of the battery cell, and the plurality of holes may be within the plurality of grooves.

The suction part may be provided with a suction line extending from each of the plurality of holes of the suction head to a central axis of the suction neck.

A branched angle of the suction line may be approximately 19° to approximately 46°, preferably 25° to 40° and more preferably 28° to 38°.

The number of plurality of holes of the suction head may be approximately 4 to approximately 8, preferably 5 to 7 or 6.

The suction head may be connected in a curve between the plurality of holes.

The suction head may have an escape hole defined between the plurality of holes.

The apparatus may further include a pressure adjustment part integrated with the pump part or connected to the pump part to control the vacuum pressure of the pump part.

If the suction part is seated on the battery cell, the pump part may be set to operate at a vacuum pressure that is preset through the pressure adjustment part.

If the pump part operates to perform the suction at the preset vacuum pressure for a set time or operates at the preset vacuum pressure by a set number of times, the suction part may be detached from the battery cell.

The apparatus may further include a cleaning part configured to clean the suction part, wherein the suction part may be disposed on the cleaning part after the suction part is detached from the battery cell.

The apparatus may further include a trap part connected to a connection line between the suction part and the pump part to store the residual electrolyte of the battery cell that is suctioned from the suction part. The trap part prevents the residual electrolyte from being introduced into the pump part.

The apparatus may further include a valve part provided in a connection line between the suction part and the pump art to open and close the connection line, wherein, if the pump part is driven, the valve part may be opened so that the residual electrolyte suctioned from the suction part is stored in the trap part.

The apparatus may further include a waste electrolyte storage part connected to the trap part and configured to store the residual electrolyte stored in the trap part that is discharged.

According to some embodiments, a method for removing a residual electrolyte includes: preparing a battery cell including an electrode assembly and an electrolyte; seating a suction part having at least one opening at one side of the battery cell; and generating a vacuum pressure in a pump part connected to the suction part to suction a residual electrolyte remaining at one side of the battery cell through the suction part.

The vacuum pressure may be controlled through a pressure adjustment part integrated with the pump part or connected to the pump part.

The suctioning of the residual electrolyte may include operating the pump part at a preset vacuum pressure through the pressure adjustment part after the seating of the suction part at the one side of the battery cell.

The method may further include, operating the pump part to perform the suction at the preset vacuum pressure for a set time or operating the pump part at the preset vacuum pressure by a set number of times, and detaching the suction part from the battery cell.

The method may further include cleaning the suction part detached from the battery cell by placing the suction part on the cleaning part.

The suctioning of the residual electrolyte may include storing the residual electrolyte of the battery cell, which is suctioned from the suction part, in a trap part, wherein the trap part may be connected to a connection line between the suction part and the pump part to prevent the residual electrolyte from being introduced into the pump part.

According to further embodiments, an apparatus is provided for removing a residual electrolyte from a battery cell. The apparatus includes a suction part having at least one opening and configured to suction the residual electrolyte from the battery cell; and a pump part connected to the suction part to apply a vacuum pressure to the suction part.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIGS. 1A and 1B are perspective and cross-sectional views of a battery cell according to embodiments of the present disclosure;
FIG. 2 is a schematic view of an apparatus for removing a residual electrolyte according to embodiments of the present disclosure;
FIG. 3 is a cross-sectional perspective view of a state in which the battery cell and a suction part are coupled to each other according to embodiments of the present disclosure;
FIGS. 4A and 4B are front views of the suction part according to embodiments of the present disclosure;
FIG. 4C is a bottom view of the suction part of FIGS. 4A and 4B;
FIGS. 5A to 5D are bottom views of the suction part according to embodiments of the present disclosure; and
FIG. 6 is a flowchart for depicting a method for removing a residual electrolyte according to embodiments of the present disclosure.

### DETAILED DESCRIPTION

Embodiments of the present disclosure may be embodied in many different forms and should not be construed as being limited to the embodiments set forth herein. Rather, these embodiments are provided so that those skilled in the art thoroughly understand the present disclosure. Moreover, these embodiments are provided to further convey embodiments of the present disclosure to those skilled in the art.

In addition, in the following drawings, the thickness or size of each layer is exaggerated for convenience and clarity of description, and the same reference numerals in the drawings refer to the same elements. As used herein, the term "and/or" includes any and all combinations of one or more of the associated listed items. In this specification, it will also be understood that if a member A is referred to as being connected to a member B, the member A can be directly connected to the member B or indirectly connected to the member B with a member C therebetween.

The terms used in this specification are for illustrative purposes of the present disclosure only and should not be construed to limit the meaning or the scope of the present disclosure. As used in this specification, a singular form may, unless definitely indicating a particular case in terms of the context, include a plural form. Also, the expressions "comprise/include" and/or "comprising/including" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these. The term "and/or" used herein includes any and all combinations of one or more of the associated listed items.

As used herein, terms such as "first," "second," etc. are used to describe various members, components, areas, layers, and/or portions. However, it is obvious that the members, components, areas, layers, and/or portions should not be defined by these terms. The terms do not mean a particular order or superiority, and are used only for distinguishing one member, component, region, layer, or portion from another member, component, region, layer, or portion. Thus, a first member, component, region, layer, or portion which will be described may also refer to a second member, component, region, layer, or portion, without departing from the present disclosure.

Spatially relative terms, such as "below," "beneath," "lower," "above," "upper" and the like, may be used herein for ease of description to describe one element or feature's relationship to another element(s) or feature(s) as illustrated in the figures. These spatially relative terms are intended for easy comprehension of the prevent invention according to various process states or usage states of the prevent disclosure, and thus, the present disclosure is not limited thereto. For example, an element or feature shown in the drawings is turned inside out, the element or feature described as "beneath" or "below" may change into "above" or "upper". Thus, the term "lower" may encompass the term "upper" or "below".

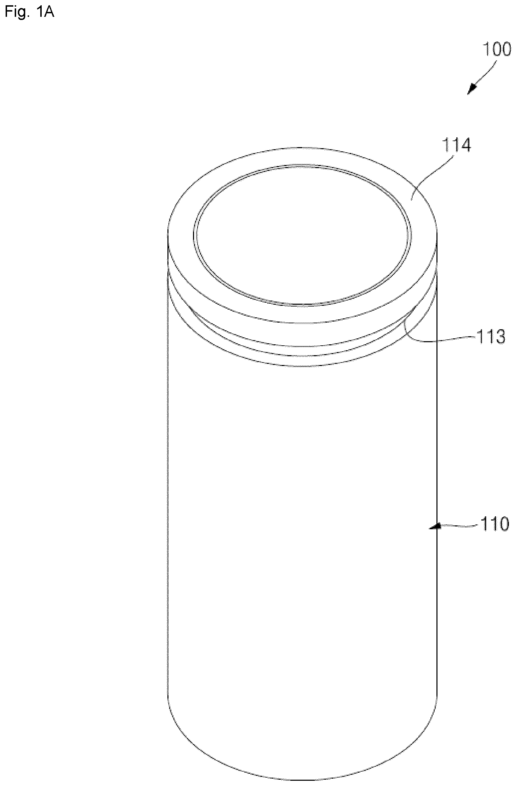

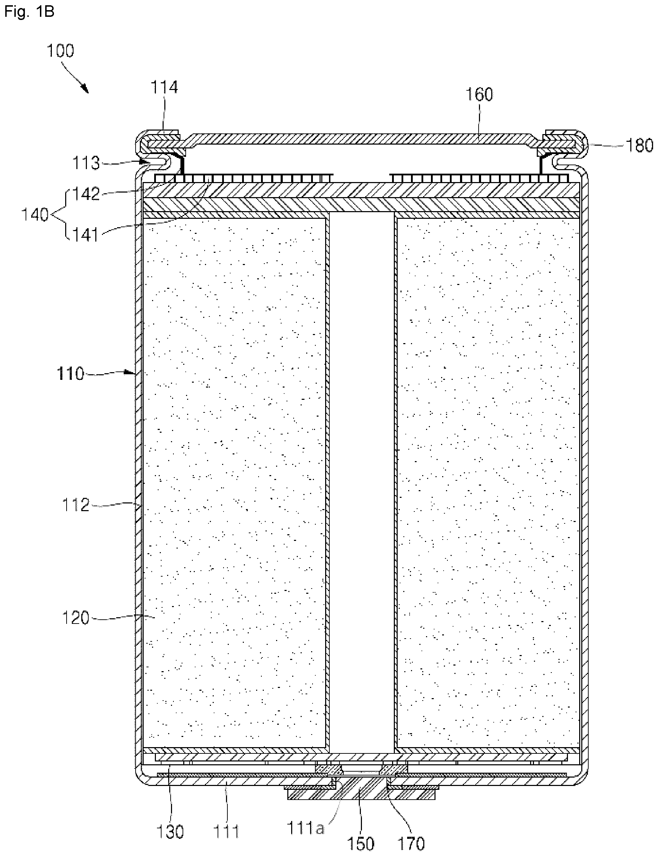

Hereinafter, a battery cell according to embodiments of the present disclosure will be described in detail with reference to the accompanying drawings (in which an upper side is defined as an upward direction, and a lower side is defined as a downward direction with reference to FIGS. 1A and 1B).

FIG. 1A is a perspective view of a battery cell according to embodiments of the present disclosure, and FIG. 1B is a cross-sectional view of the battery cell illustrated in FIG. 1A.

As illustrated in FIGS. 1A and 1B, a battery cell 100 according to embodiments of the present disclosure may include a case 110, an electrode assembly accommodated in the case 110, a terminal 150 coupled to a terminal hole provided in one end of the case 110, and a cap plate 160 that seals an opening of the other end of the case 110.

The case 110 may be provided in a cylindrical shape with an upper portion opened. In some embodiments, a flat circular plate-shaped bottom part 111 of the case 110 and a side part 112 extending from the bottom part 111 may be integrated with each other. The case 110 may be made of, for example, steel, a steel alloy, aluminum, an aluminum alloy, or an equivalent thereof.

The terminal hole may be provided to pass through a central portion of the bottom part 111 of the case 110. A terminal 150 may be inserted and coupled to the terminal hole. A first gasket 170 for sealing and electrical insulation may be further interposed between the terminal hole and the terminal 150. The first gasket 170 may be made of a resin material such as polyethylene (PE), polypropylene (PP), polyethylene terephthalate (PET), or the like.

As described above, an upper portion of the case 110 of the battery cell 100 may be opened during the manufacturing process, and the electrode assembly 120 may be inserted into the case 110 together with an electrolyte through the opened upper portion. After the electrolyte and the electrode assembly 120 are inserted into the case 110, the cap plate 160 may be coupled to the opened upper portion to seal the inside of the case 110. The electrolyte may serve to allow movement of lithium ions between a positive electrode plate and a negative electrode plate, which constitute the electrode assembly 120. The electrolyte may be a nonaqueous organic electrolyte that is a mixture of lithium salt and a high-purity organic solvent. Furthermore, the electrolyte may be, for example, a polymer (e.g., a polymer electrolyte) or a solid electrolyte.

In the can 110, a beading part 113 recessed inward may be defined at a lower portion of the can 110 with respect to the cap plate 160 to prevent the cap assembly 140 from being separated to the outside. A crimping part 114 bent inward may be formed at an upper portion of the can 110. In the case 110, after the electrode assembly 120 is inserted through the opened lower end, the beading part 113 may be provided to prevent the electrode assembly 120 from being separated from the case 110.

The beading part 113 may be concave when viewed from the outside of the case 110 by pressing the side part 112 of the case 110 toward the inside of the electrode assembly 120. In some embodiments, the beading part 113 may protrude inward in a ring shape along a circumference of the side part 112 of the case 110. The cap plate 160 may be seated on the beading part 113 and be primarily supported, and a second gasket 180, described below, may be in contact with a second current collector 140 and be secondarily supported so that the cap plate 160 is stably supported.

The electrode assembly 120 may include a first electrode plate, a second electrode plate, and a separator. The first electrode plate may be a positive electrode plate, and the second electrode plate may be a negative electrode plate, or vice versa. Hereinafter, for convenience of explanation, a case in which the first electrode plate is a positive electrode plate, and the second electrode plate is a negative electrode plate is described.

In the first electrode plate, a positive electrode active material made of transition metal oxide may be applied to at least one surface of a plate-shaped metal foil made of aluminum (Al). In some embodiments, a negative electrode such as graphite or carbon may be applied to at least one surface of a plate-shaped metal foil made of copper (Cu) or nickel (Ni). The separator may be made of, for example, polyethylene (PE) or polypropylene (PP). The separator may prevent short circuit from occurring between the first electrode plate and the second electrode plate and allow lithium ions to move only.

The electrode assembly 120 may be in the form of a jelly roll in which the first electrode plate, the second electrode plate, and the separator are stacked and then wound in a substantially cylindrical shape from the winding front end. In some embodiments, in the electrode assembly 120, the positive electrode non-coating portion that is not coated with the positive electrode active material may protrude downward from the first electrode plate, and the negative electrode non-coating portion that is not coated with the negative electrode active material may protrude upward from the second electrode plate. However, the electrode assembly 120 is not limited thereto, and may be in the form of a stack in which a positive plate/separator/negative electrode plate, each of which has a predetermined standard, are sequentially stacked, and the electrode assembly can take any form known in the art.

A first current collector plate 130 may be a circular metal plate having a shape corresponding to a bottom surface of the electrode assembly 120. The first current collector plate 130 may be made of aluminum (Al). The first current collector plate 130 may serve as a path for a current flow between the first electrode plate of the electrode assembly 120 and the terminal 150.

The second current collector plate 140 may include a circular planar part 141 corresponding to the top surface of the electrode assembly 120. The second current collector plate 140 may include an extension part 142 extending upward from the planar part 141, for example, extending upward from an edge of the planar part 141. The bottom surface of the planar part 141 may be fixed and electrically connected to the second electrode plate exposed to the upper side of the electrode assembly 120 in a state of being in contact with the top surface of the electrode assembly 120.

The extension part 142 may be in contact with and be coupled to the beading part 113 of the case 110. In some embodiments, the extension part 142 may be coupled, e.g., by welding, with an inner surface of the beading part 113 of the case 110. In some embodiments, the extension part 142 may be provided in plurality to be spaced apart from each other along the edge of the planar part 141. The second current collector plate 140 may serve as a path for the current flow between the second electrode plate 122 of the electrode assembly 120 and the case 110. In some embodiments, the case 110 may be a negative electrode terminal.

The terminal 150 may be inserted into a terminal hole provided in the bottom part 111 of the case 110 and electrically connected to the first electrode collector plate 130. In some embodiments, the terminal 150 may be a positive electrode terminal. The terminal 150 and the case 110 may have different polarities. The terminal 150 may be made of the same or similar material as each of the first electrode collector plate 130 and the first electrode plate.

The terminal 150 may be coupled to the terminal hole of the case 110 from the outside to the inside. In some embodiments, the terminal 150 may be compressed and deformed (compressed and molded) by riveting and thus may be pressed in a state in which the first gasket 170 is interposed in an upper portion of the bottom part 111. Here, a first gasket 170 may be interposed between the terminal 150 and the terminal hole to electrically insulate the terminal 150 from the case 110 and seal the terminal 150 and the case 110. The terminal 150 may be electrically connected to the first electrode plate of the electrode assembly 120 through the first current collector plate 130.

The cap plate 160 may be provided as a circular metal plate and may be coupled to an upper end of the case 110. A top surface of the cap plate 160 may be exposed to the outside. The cap plate 160 may be coupled to the upper end of the case 110 such that the second gasket 180 is interposed so as to prevent an electrical connection to the case 110. Because the cap plate 160 is not electrically connected to the positive electrode or the negative electrode of the electrode assembly 120, there may be no separate electrical polarity. The cap plate 160 may be made of, for example, aluminum, an aluminum alloy, or an equivalent.

The cap plate 160 may be fixed such that an end of the cap plate 160 is disposed between the beading part 113 and the crimping part 114 of the case 110. The second gasket 180 may press the case 110 and the cap plate 160 to seal a gap between the case 110 and the cap plate 160, thereby preventing the cap plate 160 from being separated from the case 110.

In some embodiments, the second gasket 180 may be interposed between the case 110 and the cap plate 160 to electrically insulate the case 110 from the cap plate 160. In some embodiments, the cap plate 160 may be electrically non-polar. In some embodiments, in the battery cell 100, the terminal 150 may be provided on one surface of the case 110 instead of the cap plate 160, and thus, the negative electrode and the positive electrode may be simultaneously provided on the one side.

FIGS. 1A and 1B illustrate a state in which the cap plate 160 and the second gasket 180 are accommodated and sealed in the battery cell 100.

An upper portion of the case 110 may be bent toward a central portion of the case 110 through a crimping process and then may be transformed into a structure that surrounds an upper portion of the second gasket 180 and an upper periphery of the cap plate 160. In some embodiments, the cap plate 160 and the second gasket 180 are in the case 110, and then, the beading part 113 and the crimping part 114 are provided such that the second gasket 180 and the cap plate 160 are in contact with each other.

The electrode assembly 120 may be inserted into the case 110 together with the electrolyte through the opened upper portion during the manufacturing process. In some embodiments, the beading part 113 may be provided in the battery cell 100 before the cap plate 160 and the second gasket 180 are assembled. In some embodiments, a residual electrolyte may remain in the battery, e.g. in the beading part 113 and the extension portion 142 of the second current collector 140 that is in contact with and coupled to the beading part 113 after the electrolyte is injected.

If the subsequent manufacturing process is performed with the residual electrolyte remaining, a limitation such as dimensional abnormalities after molding, contamination of the upper portion of the cell, and contamination of the molding equipment may occur, and thus, a continuous production may not be possible.

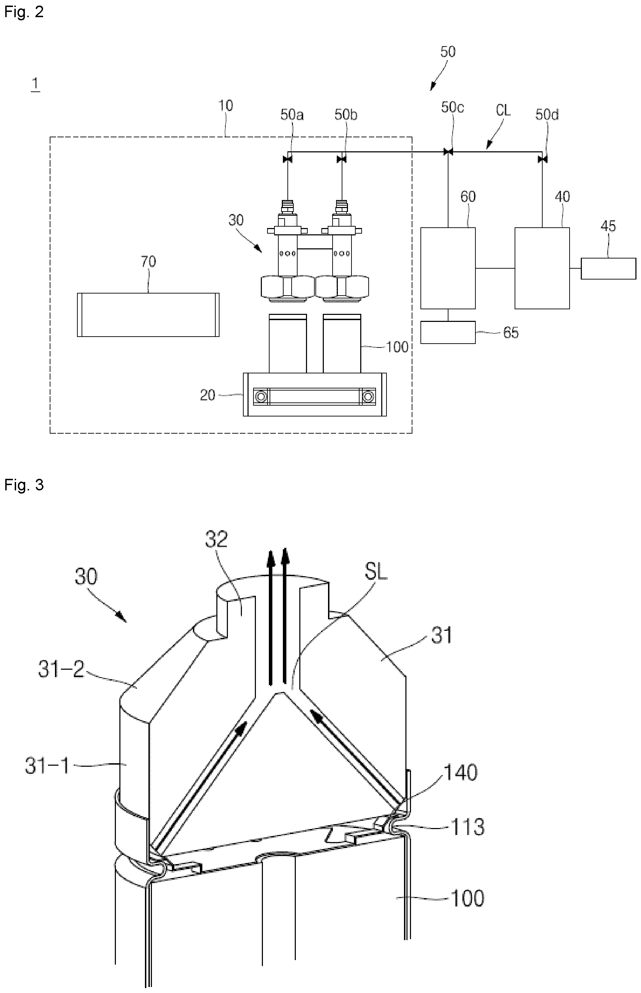

In some embodiments, the apparatus 1 for removing the residual electrolyte according to embodiments may suction and remove the residual electrolyte remaining in the battery cell 100 during the process of manufacturing the battery cell 100. Hereinafter, the apparatus 1 for removing the residual electrolyte will be described with reference to FIG. 2.

FIG. 2 is a schematic view of the apparatus for removing the residual electrolyte according to embodiments of the present disclosure.

In some embodiments, the apparatus 1 for removing the residual electrolyte may include a suction part 30 having at least one opening and a pump part 40 connected to the suction part 30 configured to apply a vacuum pressure to the suction part 30 to suction the residual electrolyte through the suction part 30.

In some embodiments, the apparatus 1 for removing the residual electrolyte may include a housing 10, a cell fixing part 20 which is disposed in the housing 10 and to which the battery cell 100 is fixed, the suction part 30 that suctions the residual electrolyte of the battery cell 100, and/or a cleaning part 70 for cleaning the suction part 30. The cell fixing part 20, the suction part 30, and the cleaning part 70 may be disposed within the housing 10 but the disclosure is not restricted thereto.

In some embodiments, the apparatus 1 for removing the residual electrolyte may include a pump part 40. The pump part 40 may be disposed outside the housing 10 and connected to the suction part 30. The apparatus 1 may include a pressure adjustment part 45, a valve part 50, a trap part 60, and/or a waste electrolyte storage part 65. The above-described components may be disposed on one process line and connected through a plurality of pipes, tubes, valves, connectors, etc. (connection members). A separate description with respect to the connection members connecting the above-described components will be omitted.

In each component of the apparatus 1 for removing the residual electrolyte, controllable components (e.g., components that can be opened/closed or turned on/off) may be controlled by a separate controller (not shown). A controller and/or other related devices or components according to embodiments of the present disclosure may be implemented using any suitable hardware, firmware (e.g., application-specific semiconductor), software, or a suitable combination of software, firmware, and hardware. In some embodiments, various components of the controller and/or other related devices or parts according to the present disclosure may be formed on one integrated circuit chip or a separate integrated circuit chip. In some embodiments, various components of the controller may be implemented on a flexible printed circuit film and may be formed on a tape carrier package, a printed circuit board, or a substrate that is the same as the controller. In some embodiments, various components of the controller be processors or threads, which are executed in one or more processors, in one or more computing devices, and it may execute computer program instructions and interact with other components to perform various functions discussed below. The computer program instructions may be stored in memory that is capable of being executed in the computing device using standard memory device such as, for example, random access memory. The computer program instructions may also be stored in other non-transitory computer readable media such as, for example, a CD-ROM, flash drive or the like. In some embodiments, the functions of various computing devices are combined with each other or incorporated into one computing device, or the functions of a particular computing device are dispersed in one or more other computing devices without departing from the exemplary embodiments of the present disclosure.

For example, the controller according to embodiments of the present disclosure may operate on a normal commercial computer constituted by a central processing unit, a mass storage device such as a hard disk or a solid-state disk, a volatile memory device, an input device such as a keyboard or a mouse, and an output device such as a monitor or a printer. Hereinafter, even if the control subject of the controllable components is not specifically mentioned, it should be understood that the control subject can be provided to control the controllable component.

Referring to FIG. 2, the housing 10 may have an internal space, and an openable door may be provided at one side of the housing 10.

The battery cell 100 may be mounted on the cell fixing part 20, and the cell fixing part 20 may include a plurality of frames, plates, etc. In some embodiments, the battery cell 100 may be mounted on the cell fixing part 20 so that a liquid injection port faces an upper side. The cell fixing part 20 may be provided with a frame so that the plurality of battery cells 100 are mounted in a row. In some embodiments, the plurality of battery cells 100 may be detachably mounted within the internal space of the frame the cell fixture 20.

In some embodiments, the cell fixing part 20 may be provided with a moving unit so that the frame on which the battery cell 100 is mounted moves to a position of the suction part 30. In some embodiments, the moving unit may be disposed on the suction part 30 so that the suction part 30 moves to an upper portion of the cell fixing part 20.

The suction part 30 may have at least one opening to suction the residual electrolyte from the battery cell 100. In some embodiments, the suction part 30 may be seated on the battery cell 100 to suction the residual electrolyte from the top portion of the battery cell 100. In some embodiments, the suction part 30 may be disposed at the upper portion of each battery cell to individually suction the residual electrolyte of the plurality of battery cells. That is, the suction part 30 may be provided as a set of suction parts having the same number of parts as the number of battery cells 100. The suction part 30 provided as the one set may be provided with multiple sets, and the number of suction parts 30 may not be limited. A specific structure of the suction part 30 will be described later.

The pump part 40 may be connected to the suction part 30 to generate suction force by generating a vacuum pressure. Thus, an effect of removing a remaining electrolyte can be achieved with a high precision. The pump part 40 may be connected to the suction part 30 through a connection line CL. In some embodiments, the pump part 40 may be a pump or any product having an air suction function. In some embodiments, the pump part 40 is described as having a separate configuration from the suction part 30, because the vacuum pressure is generated in the pump part 40 to perform the suction in the suction part 30. However, the pump part 40 and the suction part 30 may be combined in a single vacuum suction unit. However, even if the pump part 40 and the suction part 30 are separate configurations, the pump part 40 and the suction part 30 may be connected to each other through the connection line CL. The vacuum pressure may be less than the local atmospheric pressure.

The pressure adjustment part 45 may be integrated with the pump part 40 or may be connected to the pump part 40 to control the vacuum pressure of the pump part 40. Thus, remaining electrolyte can be removed adaptively to enhance the electrolyte removal result. The pressure adjustment part 45 may serve to automatically adjust the vacuum state of the pump part 40 based on a preset vacuum pressure table and a vacuum pressure setting algorithm. The pressure adjustment part 45 may be a servo valve, a pneumatic regulator (electronic regulator), or the like. In some embodiments, the pressure adjustment part 45 may be included in the controller, and if configured separately from the controller, the pressure adjustment part 45 may be adjusted by the controller.

In some embodiments, if the suction part 30 is seated on the battery cell 100, the pump part 40 may operate at a preset vacuum pressure through the pressure adjustment part 45. For example, the pump part 40 may be set to perform the suction for a set time through the preset vacuum pressure by the pressure adjustment part 45 or be set to operate for a set number of times at the preset vacuum pressure. In some embodiments, the suction part 30 may be set to be detached from the battery cell 100 if the pump part 40 is operated for a set time with a preset vacuum pressure or operated a set number of times with a preset vacuum pressure. The setting may be set and controlled by the controller.

Referring to FIG. 2, the valve part 50 may be provided on the connection line CL between the suction part 30 and the pump part 40 to open and close the connection line CL. The valve part 50 may include a first valve part 50a and a second valve part 50b disposed at a side of the suction part 30. In some embodiments, the valve part 50 may be provided with a third valve part 50c at a position at which the pump part 40 and the trap part 60 are branched from the connection line CL. In some embodiments, a fourth valve part 50d may also be provided at a side of the pump part 40. The position of the valve part 50 may not be limited to the above position, and various valves such as an automatic opening/closing valve may be used. The valve part 50 may be opened so that the residual electrolyte suctioned from the suction part 30, if the pump part 40 is driven, is stored in the trap part 60. Thus, efficient removal of remaining electrolyte can be achieved by using the same connection line CL by use of the valve part 50.

The trap part 60 may be connected to the connection line CL between the suction part 30 and the pump part 40 so that the residual electrolyte of the battery cell 100 suctioned from the suction part 30 is stored without being introduced into the pump part 40.

The waste electrolyte storage part 65 may be connected to the trap part 60, and thus, the residual electrolyte stored in the trap part 60 may be discharged and stored. The waste electrolyte storage part 65 may be provided with an outlet so that the waste electrolyte is discharged.

The apparatus 1 for removing the residual electrolyte may include a cleaning part 70 that cleans the suction part 30. In some embodiments, there may be concern about electrolyte salt adhering to the inside of the suction part 30 and the tube (connection line) during the continuous suction of the electrolyte, and thus, after the suction part 30 is detached from the battery cell 100, the suction part 30 may be disposed at the cleaning part 70 so as to be cleaned. For example, the suction part 30 may move to the cleaning part 70 so as to be cleaned by the cleaning part disposed at a standby position after performing the suction once. The cleaning part 70 may be a dimethyl carbonate (DMC) tank, but may not be limited thereto, and various solutions capable of cleaning the electrolyte may be applied.

Hereinafter, the suction part 30 will be described in detail with reference to FIGS. 3 to 5.

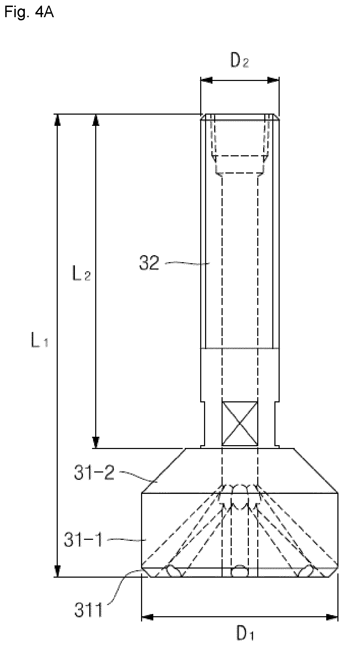

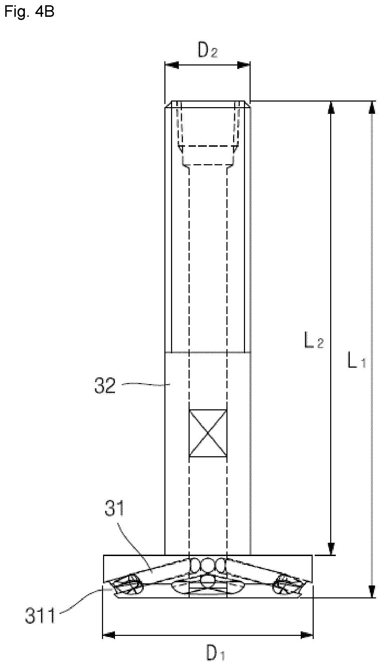

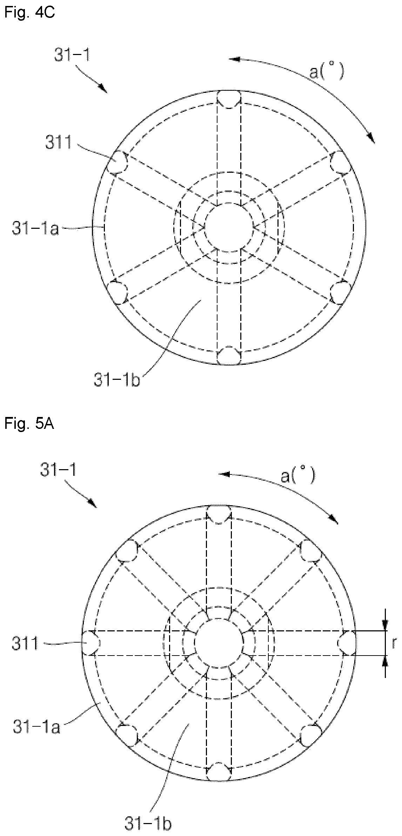

FIG. 3 is a cross-sectional perspective view of the battery cell and the suction part coupled, e.g. contacted, to each other according to embodiments of the present disclosure. FIGS. 4A and 4B are front views of the suction part according to embodiments of the present disclosure. FIG. 4C is a bottom view of the suction part of FIGS. 4A and 4B. FIGS. 5A to 5D are bottom views of the suction part according to embodiments of the present disclosure.

Referring to FIG. 3, the suction part 30 may be seated at the upper side of the battery cell 100, for example on a seated portion of the battery cell 100 like the beaded part 113, to suction the residual electrolyte from the upper portion of the battery cell 100. The portion of the battery cell 100 on which the suction part 30 is seated may be the seated portion. In some embodiments, the suction part 30 may suction the residual electrolyte remaining on edge sides of the battery cell 100, for example, edge sides of the beading part 113 and the second current collector 140 of the battery cell 100.

If seated on the battery cell 100, the suction part 30 may be provided in a shape corresponding to the shape of the battery cell 100 so as to adhere closely to the battery cell 100 without generating as much empty space as possible. In some embodiments, a case in which the battery cell 100 is provided in a cylindrical shape may be implemented as an embodiment, and the suction part 30 may also have the same cylindrical shape. In some embodiments, the present disclosure may not be limited thereto, and if the battery cell 100 is a square shape, the shape of the suction part 30 may also have a square shape.

The suction part 30 may be constituted by a suction head 31 and a suction neck 32. The suction head 31 may be seated at one side of the battery cell 100 at which an electrolyte injection port is disposed, and a bottom surface of the suction head 31 may face a top surface of the battery cell 100.

In some embodiments, the suction head 31 may include a suction head-lower portion 31-1 and a suction head-upper portion 31-2. In some embodiments, the suction head-lower portion 31-1 may be provided in a cylindrical shape, and the suction head-upper portion 31-2 may be inclined from the suction head-lower portion 31-1 to the suction neck 32. The suction head-upper portion 31-2 may be omitted in some embodiments. In some embodiments, the suction head-lower portion 31-1 and the suction neck 32 may be connected at an angle or in a stepped shape (see FIG. 4B).

The suction neck 32 may be connected to the connection line CL between the pump part 40 and the suction part 30 and may have a cylindrical shape with a suction line SL provided in the center. The suction line SL may be referred to as a suction passage leading from at least one opening of the suction part 30 to a central passage of the suction neck 32. The suction line SL may be branched to suction electrolyte from edge areas, e.g. the seated portions, of the battery cell 100 to the central passage.

Referring to FIGS. 4A and 4B, if the suction part 30 is seated on the battery cell 100, the suction head 31 may be disposed to be in close contact with the battery cell 100 so as not to generate unnecessary empty space. In some embodiments, an outer diameter D1 of the suction head-lower portion 31-1 may be approximately 90% to approximately 100% of that of the battery cell 100. In some embodiments, if the outer diameter D1 of the suction head-lower portion 31-1 is less than approximately 90% of the diameter of the battery cell 100, a distance from the case 110 to the suction hole 311 may be lengthened to deteriorate a suction effect. Therefore, in some embodiments, as the case 110 and the suction hole 311 are in close contact with each other without being spaced apart from each other, or a gap between the case 110 and the suction hole 311 is minimized, the suction force may increase to improve the effect of removing the residual electrolyte.

In some embodiments, an outer diameter D2 of the suction neck 32 may be approximately 35% to approximately 40% of the outer diameter D1 of the suction head-lower portion 31-1.

A length of the suction neck 32 (vertical length L2 in the drawings) may be approximately 70% to approximately 92% of the total length of the suction part 30 (vertical length L1 in the drawings). In some embodiments, the total lengths L1 of the suction part 30 in FIGS. 4A and 4B may be the same. In some embodiments, the lengths of the suction head 31 may be different in FIGS. 4A and 4B. As described above, in FIG. 4A, the suction head 31 may include the lower portion 31-1 and the upper portion 31-2, and in FIG. 4B, the suction head 31 may include only the lower portion 31-1. That is, the length of the suction head 31 in FIG. 4A may be relatively longer than the length of the suction head 31 in FIG. 4B.

In some embodiments, as a ratio of the length of the suction head 31 (vertical length L1-L3 in the drawings) to the total length L1 of the suction part 30 increases, a length from the branched position of the suction line SL to the suction hole 311 may increase, and thus, a branched angle of the suction line SL may increase. That is, in the embodiment depicted in FIG. 4B, the branched angle may be relatively small compared to that in FIG. 4A because the length of the suction head 31 is short and branched without the upper portion 31-2. In some embodiments, the branched angle of the suction line SL may be approximately 19° to approximately 46°. This may increase the suction effect. In some embodiments, if the branched angle is less than approximately 19° or more than approximately 46°, the suction effect may be reduced, and thus, the residual electrolyte may remain even after the suction.

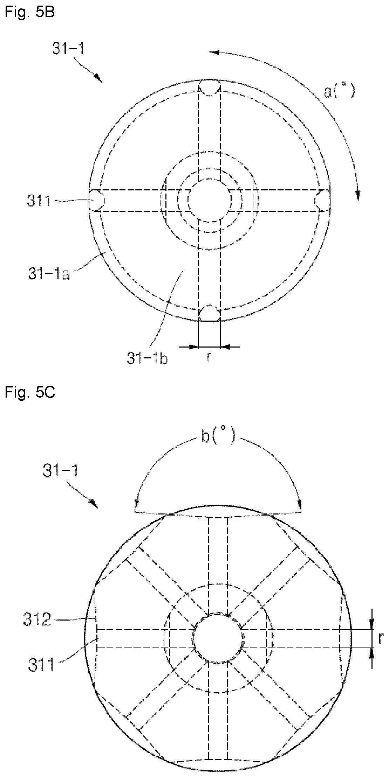

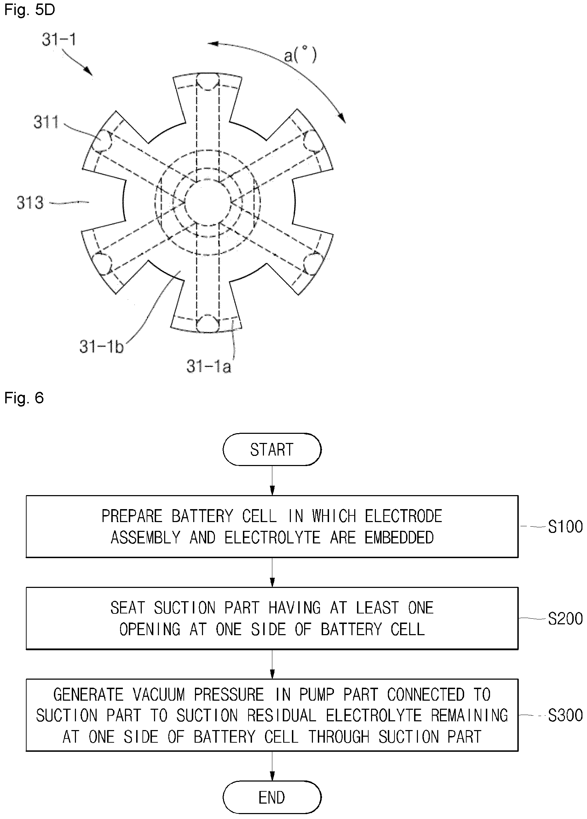

Referring to FIGS. 4C, 5A, 5B, 5C, and 5D, the suction head 31 may be provided with a plurality of suction holes 311. The plurality of suction holes 311 may be disposed on an edge area 31a of the suction head 31. For example, the number of suction holes 311 may be approximately 4 to approximately 8. Thus, removal of electrolyte of the circumference may be provided while maintaining suction power per suction hole 311. In some embodiments, if the number of suction holes 311 is less than approximately 4, there may be the effect of removing the residual electrolyte, but it may not be possible to cover the entire upper circumference of the battery cell 100. In some embodiments, if the number of suction holes 311 exceeds approximately 8, it may be possible to provide the suction for the entire upper circumference of the battery cell 100, but the vacuum pressure per hole may decrease due to the large number of holes.

In some embodiments, a diameter r of the suction hole 311 may be approximately 0.5% to approximately 1% of the diameter of the battery cell 100. In some embodiments, if the diameter r of the suction hole 311 exceeds approximately 1% of the diameter of the battery cell 100, an amount of air suction may increase, and if the diameter r is less than approximately 0.5% of the diameter of the battery cell 100, the suction power may decrease.

The suction hole 311 may be in contact with, e.g. open towards, the seated portion of the battery cell 100, e.g. an edge area of the battery cell 100. The bottom surface of the suction head 31 may have an edge area 31-1a and a center area 31-1b. Because most of the residual electrolyte remains on the edge area of the battery cell 100, the suction holes 311 may be provided in the edge area 31-1a of the suction head 31. The edge area 31-1a of the suction head 31 may be in contact with, e.g. open towards, the edge area of the battery cell 100. In some embodiments, an angle a° between the adjacent suction holes 311 may be the same between each of the holes. In some embodiments, a gap between holes may be constant.

Referring to FIG. 5C, the suction head 31 may have a plurality of grooves 312 at regular intervals. The plurality of grooves 312 may be positioned on an edge area 31a of the suction head 31. For example, the grooves 312 may be positioned where the suction head 31 is in contact with the seated portion of the battery cell 100. In some embodiments, the plurality of suction holes 311 may be within a plurality of grooves 312, respectively. This may increase the suction effect. In some embodiments, a formation angle b° of each of the grooves 312 may be approximately 170° or more. In some embodiments, if a formation angle b° of the groove 312 is less than approximately 170 degrees, the distance between the case 110 and the suction hole 311 may increase to reduce the suction effect.

In some embodiments, referring to FIGS. 4C and 5A to 5C, the suction head 31 may be provided by connecting the plurality of suction holes 311 to each other in a curve. However, referring to FIG. 5D, the suction head 31 may have an escape hole 313 defined between the plurality of suction holes 311. Thus, due to the escape holes 313, maintaining a suction effect through the suction holes 311 may be improved.

FIG. 6 illustrates a flowchart for a method of removing a residual electrolyte according to embodiments of the present disclosure.

Referring to FIG. 6, in some embodiments, an electrode assembly 120 and a battery cell 100 containing an electrolyte may be prepared through the apparatus 1 for removing the residual electrolyte (S100).

In some embodiments, the battery cell 100 may be mounted on a cell fixing part 20 so that a liquid injection port faces an upper side. The cell fixing part 20 may be provided with a frame so that the plurality of battery cells 100 are mounted in a row. In some embodiments, the plurality of battery cells 100 may be detachably mounted within the internal space of the frame of the cell fixture 20.

In some embodiments, the apparatus 1 for removing the residual electrolyte may seat a suction part 30 having at least one opening at one side of the battery cell 100 (S200).

In some embodiments, a moving unit may be formed on the cell fixing part 20 to move the frame on which the battery cell 100 is mounted to a position of the suction part 30, or the moving unit may be formed on the suction part 30 to move the frame to the suction part 30 to an upper portion of the cell fixing part 20.

In some embodiments, the suction part 30 may be disposed at the upper portion of each battery cell to individually suction the residual electrolyte of the plurality of battery cells. That is, the suction part 30 may be a set of suction parts having the same number of suction parts as the number of battery cells 100.

In some embodiments, the suction part 30 may suction the residual electrolyte remaining on edge sides of the beading part 113 and the second current collector 140 of the battery cell 100. If seated on the battery cell 100, the suction part 30 may be provided in a shape corresponding to the shape of the battery cell 100 so as to adhere closely to the battery cell 100 without generating significant empty space.

In some embodiments, the apparatus 1 for removing the residual electrolyte may generate a vacuum pressure in a pump part 40 connected to the suction part 30 to suction a residual electrolyte remaining at one side of the battery cell 100 through the suction part 30 (S300). In some embodiments, after a process S300 of seating the suction part 30 at one side of the battery cell 100, the apparatus 1 for removing the residual electrolyte may operate the pump part 40 at a vacuum pressure that is preset through a pressure adjustment part 45.

In some embodiments, the vacuum pressure may be set by the pump part 40 or may be controlled through the pressure adjustment part 45 connected to the pump part 40.

In some embodiments, the apparatus 1 for removing the residual electrolyte may store the residual electrolyte of the battery cell 100 suctioned from the suction part 30 in a trap part 60. In some embodiments, the trap part 60 may be connected to a connection line between the suction part 30 and the pump part 40 to store the residual electrolyte so that the residual electrolyte is not introduced into the pump part 40.

In some embodiments, in the apparatus 1 for removing the residual electrolyte, if the pump part 40 performs the suction at a preset vacuum pressure for a set time or operates at the preset vacuum pressure by set number of times, the suction part 30 may be detached from the battery cell 100.

In some embodiments, the apparatus 1 for removing the residual electrolyte may clean the suction part 30 detached from the battery cell 100 by placing the suction part 30 on the cleaning part 70. For example, the suction part 30 may move to the cleaning part 70 so as to be cleaned by the cleaning part disposed at a standby position after performing the suction once. In some embodiments, electrolyte salts may be prevented from sticking inside the suction part 30 and a tube (connection tube) during continuous suction of the electrolyte.

According to the embodiments of the present disclosure, the residual electrolyte remaining after the electrolyte injection may be removed in the suction manner disclosed herein. This reduces formation of dimensional abnormalities, contamination of an upper portion of a cell, and contamination of molding equipment. Thus, the disclosed apparatus and methods allow for continuous production with improved product quality and product reliability.

According to the embodiments of the present disclosure, the cleaning of the residual electrolyte, which is performed manually during the process of manufacturing the secondary battery, may be replaced with the method for suctioning the residual electrolyte using the suction equipment. Thus, the residual electrolyte may be more easily and efficiently cleaned.

According to the embodiments of the present disclosure, the suction equipment may be cleaned after suctioning the residual electrolyte to manage the cleanliness of the suction equipment and prevent the electrolyte salt from sticking inside the suction equipment and the pipes during the continuous suction of the electrolyte.

The above-mentioned embodiments are examples. Thus, the present disclosure is not limited to the foregoing embodiments, and also it will be understood by those of ordinary skill in the art that various changes in form and details may be made therein without departing from the present disclosure.

## Claims

1. An apparatus (1) for removing a residual electrolyte, the apparatus (1) comprising:
a suction part (30) having at least one opening and configured to suction the residual electrolyte from a battery cell (100) comprising an electrode assembly (120) and an electrolyte; and
a pump part (40) connected to the suction part (30) configured to apply a vacuum pressure to the suction part (30) to suction the residual electrolyte through the suction part (30).

2. The apparatus (1) as claimed in claim 1, wherein the suction part (30) comprises:
a suction head (31) configured to be seated on the battery cell (100); and/or
a suction neck (32) connected to a connection line (CL) between the pump part (40) and the suction part (30).

3. The apparatus (1) as claimed in claim 2, wherein a lower portion (31-1) of the suction head (31) comprises a shape corresponding to a shape of the battery cell (100).

4. The apparatus (1) as claimed in any of the claims 2 to 3, wherein a lower portion (31-1) of the suction head (31) has a cylindrical shape, and/or
wherein an upper portion (31-2) of the suction head (31) is inclined on the suction neck (32).

5. The apparatus (1) as claimed in any of the claims 2 to 4, wherein an outer diameter (D1) of the lower portion (31-1) of the suction head (31) is 90% to 100% of a diameter of the battery cell (100).

6. The apparatus (1) as claimed in any of the claims 2 to 5, wherein the suction head (31) comprises a plurality of holes (311) on an edge area (31-1a) of the suction head (31).

7. The apparatus (1) as claimed in claim 6, wherein the suction head (31) has a plurality of grooves (312) at regular intervals on the edge area (31-1a) of the suction head (31), and
wherein the plurality of holes (311) is located within the plurality of grooves (312), respectively.

8. The apparatus (1) as claimed in one of the claims 6 to 7, wherein the suction part (30) has a suction line (SL) extending from each of the plurality of holes (311) of the suction head (31) to a central axis of the suction neck (32).

9. The apparatus (1) as claimed in claim 8, wherein a branched angle of the suction line (SL) is 19° to 46°.

10. The apparatus (1) as claimed in one of the claims 6 to 9, wherein the number of plurality of holes (311) of the suction head (31) is 4 to 8.

11. The apparatus (1) as claimed in one of the claims 6 to 10, wherein the suction head (31) is connected in a curve between the plurality of holes (311).

12. The apparatus (1) as claimed in one of the claims 6 to 10, wherein the suction head (31) has an escape hole (313) between the plurality of holes (311).

13. The apparatus (1) as claimed in one of the claims 1 to 12, further comprising a pressure adjustment part (45) integrated with the pump part (40) or connected to the pump part (40) configured to control the vacuum pressure of the pump part (40); and/or
a cleaning part (70) configured to clean the suction part (30), when the suction part (30) is disposed on the cleaning part (70) after the suction part (30) is detached from the battery cell (100); and/or
a trap part (60) connected to a connection line (CL) between the suction part (30) and the pump part (40) and configured to store the residual electrolyte of the battery cell (100) suctioned from the suction part (30), to prevent the residual electrolyte from being introduced into the pump part (40).

14. The apparatus as claimed in claim 13, further comprising a valve part (50) provided in a connection line (CL) between the suction part (30) and the pump part (40) to open and close the connection line (CL), wherein the valve part (50) is configured to open so that the residual electrolyte suctioned from the suction part (30) is stored in the trap part (60) when the pump part (40) is driven; and/or
a waste electrolyte storage part (65) connected to the trap part (60) and configured to store the residual electrolyte stored in the trap part (60) and to discharge the residual electrolyte.

15. A method of removing a residual electrolyte, the method comprising:
preparing a battery cell (100) including an electrode assembly (120) and an electrolyte;
seating a suction part (30) having at least one opening; and
generating a vacuum pressure in a pump part (40) connected to the suction part (30) to suction a residual electrolyte through the suction part (30).
